Europäisches Patentamt

European Patent Office

Office européen des brevets

(11) Numéro de publication: **0 407 956 A1**

# DEMANDE DE BREVET EUROPEEN

(21) Numéro de dépôt: **90113131.8**

(51) Int. Cl.5: **H04L 27/18**

(22) Date de dépôt: **10.07.90**

Le titre de l'invention a été modifié (Directives relatives à l'examen pratiqué à l'OEB, A-III, 7.3)

(30) Priorité: **10.07.89 FR 8909245**

(43) Date de publication de la demande:
**16.01.91 Bulletin 91/03**

(84) Etats contractants désignés:
**BE DE ES FR GB IT NL SE**

(71) Demandeur: **ALCATEL TRANSMISSION PAR FAISCEAUX HERTZIENS A.T.F.H.**
**55, rue Greffulhe**
**F-92310 Levallois-Perret Cédex(FR)**
(84) **FR**

Demandeur: **ALCATEL N.V.**
**Strawinskylaan 341**
**NL-1077 XX Amsterdam(NL)**
(84) **BE**

(72) Inventeur: **Isard, Marc**
**33, rue Schnapper**
**F-78100 Saint Germain en Laye(FR)**
Inventeur: **Roux, Pierre**
**12, boulevard Jean Allemane**
**F-92300 Levallois Perret(FR)**

(74) Mandataire: **Weinmiller, Jürgen et al**
**Lennéstrasse 9 Postfach 24**
**D-8133 Feldafing(DE)**

(54) **Procédé de codage différentiel pour un système de modulation en sauts de phase.**

(57) L'invention concerne un procédé de codage différentiel dans une transmission numérique dans lequel pour permettre la transmission dans le cas d'éventuels faux accrochages, le codage différentiel se fait sur les transitions entre les symboles à coder, et ceux qui leur sont antérieurs de 4 temps symboles.
Application notamment au domaine des transmissions par faisceaux hertziens.

FIG.2

# PROCÉDÉ DE CODAGE DIFFÉRENTIEL

L'invention concerne un procédé de codage différentiel. Un tel procédé est un procédé destiné à la transmission numérique par modem, qui résiste aux faux accrochages de la récupération de porteuse.

Une thèse de docteur-Ingénieur (Monsieur KAMANOU Ecole supérieure de Telecommunications ; 1988) donne la description d'un codage différentiel appliqué à une modulation MAQ $2^m$. Etant donnée une constellation de $M = 2^n$ points possédant une symétrie axiale d'ordre 4, un tel codage différentiel permet de répondre au problème de définition de la procédure de codage bit-symbole telle que :

- Les symboles soient décodés de façon non ambiguë dans le récepteur, quelle que soit la phase de la porteuse récupérée ;
- L'augmentation de la probabilité d'erreur-bit soit minimale par rapport au cas non codé.

Dans une transmission numérique, quel que soit le type de démodulation, il existe, du fait notamment de la dérive en température de l'oscillateur utilisé des "faux accrochages" du signal référence sur le signal à démoduler, pour lesquels on obtient une information de phase erronée. Ces faux accrochages sont situés aux multiples du quart du débit numérique de part et d'autre de la fréquence centrale.

En effet lorsque l'on reçoit un signal affecté d'une modulation numérique, l'opération de démodulation implique que soit reconstruite localement un signal "porteuse", correspondant à la fréquence centrale du spectre du signal reçu. Les systèmes destinés à reconstruire cette porteuse sont généralement sujets à ces faux accrochages qui rendent la transmission inexploitable. Ce problème s'avère particulièrement gênant lorsque la plage d'accrochage désirée pour la récupération de porteuse est supérieure au quart du débit symbolique transmis par le canal.

Une solution à ce problème des faux accrochages de la porteuse consiste à installer un circuit de reconnaissance des faux accrochages, qui fournit une information de présence de faux accrochage apte à relancer le processus de recherche pour la récupération de porteuse.

Mais il est difficile de trouver un critère infaillible, permettant de diagnostiquer tous les faux accrochages, et qui ne se déclenche pas sur d'autres problèmes de transmission, tels que des évènements de propagation (fading par exemple).

En outre des dispositifs utilisant de tels circuits de reconnaissance mettent en oeuvre des délais augmentant le temps d'accrochage de la récupération de porteuse.

L'invention a pour objet de présenter une solution aux problèmes des faux accrochages qui soit simple, économique et qui n'augmente pas le temps d'accrochage de la porteuse.

L'invention propose à cet effet un procédé de codage différentiel pour tranmission numérique, caractérisé en ce que pour permettre la transmission en présence d'un faux accrochage de la porteuse, le codage différentiel se fait non pas sur les transitions entre un symbole et celui qui le précède, mais sur les transitions entre un symbole, et celui qui lui est antérieur de quatre temps symboles.

Avantageusement l'invention permet d'interpréter correctement l'information transmise, même en cas de faux accrochages.

Les caractéristiques et avantages de l'invention ressortiront d'ailleurs de la description qui va suivre, à titre d'exemple non limitatif, en référence aux figures annexées sur lesquelles :
- la figure 1 illustre l'utilisation d'un codage différentiel ;
- les figures 2 et 3 illustrent schématiquement le procédé de l'invention ;
- les figures 4 et 5 illustrent le procédé de l'invention dans une modulation à 4 phases.

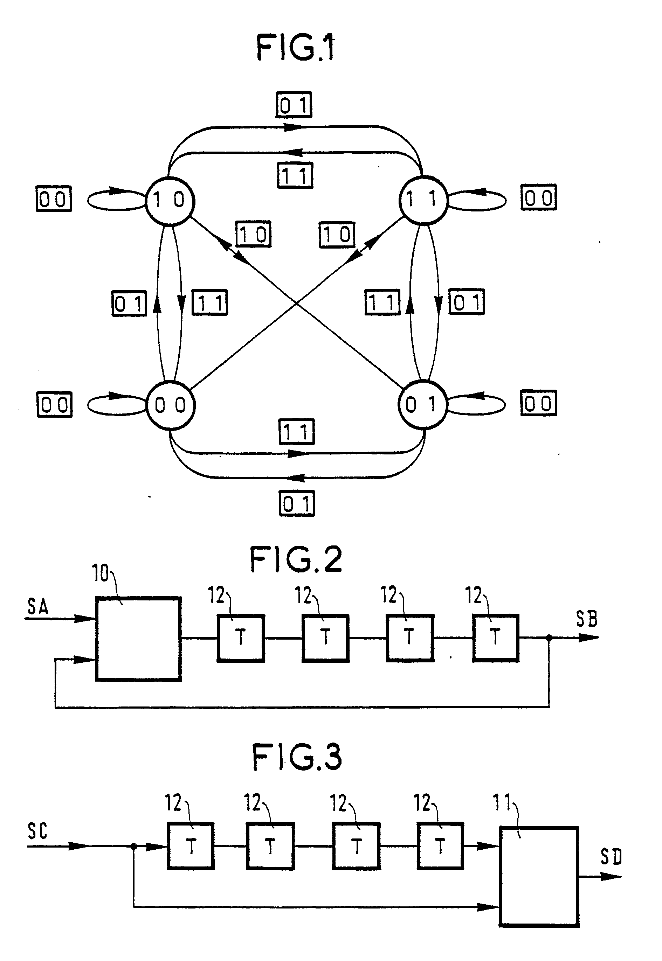

Un codage différentiel possible, comme représenté sur la figure 1, est connu et généralement utilisé pour éviter l'ambiguïté de phase dans la récupération de porteuse, en codant les variations de phase sur les signaux démodulés P, Q.

Dans un codage différentiel l'information ne réside pas dans les coordonnées d'un point de la constellation (différents états de phase et d'amplitude), amenée en coïncidence avec une grille d'estimation, mais dans la transition entre deux points comme représenté sur la figure 1. Sur cette représentation, en fonction des états de départ (00, 01, 10 ou 11) et des mots à transmettre on obtient les états d'arrivée. Ainsi par exemple avec l'état de départ

(10) ,

avec un mot à transmettre

$$\boxed{10},$$

$$\boxed{10},$$

on obtient l'état d'arrivée

$$\textcircled{01}, .$$

Les faux accrochages sur la porteuse correspondent à des valeurs précises de la fréquence : celles pour lesquelles la différence entre la fréquence de faux accrochage et la fréquence centrale du spectre du signal reçu est égale à un multiple du quart du débit symbolique transmis par le canal.

Lorsque la fréquence de la porteuse est incorrecte, le signal reçu sur les deux voies en phase et en quadrature s'écrit : $x' + j y'$ avec :

$x'(t) = x(t) \cos [(w-wo)t -\phi] - y(t) \sin [(w-wo)t -\phi]$

$y'(t) = x(t) \sin [(w-wo)t -\phi] + y(t) \cos [(w-wo)t -\phi]$

Les signaux étant identiques à 90° près.

- avec $w = 2 \pi f$ ;
- f : fréquence de la porteuse récupérée ;
- f0 : fréquence d'accrochage correcte ;
- [x(t), y(t)] : signal reçu lorsque la fréquence d'accrochage est correcte.

En cas de faux accrochage, il y a, à chaque temps symbole, une rotation du signal reçu de $k \pi/2$.

Etant donné les symétries des modulations numériques utilisées, (4 états par exemple), une rotation de $k \pi/2$ entre deux instants d'échantillonnage est sans effet sur les estimateurs de phase échantillonnés.

L'accrochage est donc permis sur l'ensemble des fréquences égales à $f = f0 + kD/4$ ; D étant la fréquence d'échantillonnage, égale au débit symbolique transmis en général.

Les estimateurs de phase non échantillonnés sont, eux aussi, susceptibles de s'accrocher sur ces fréquences ; car, si durant la durée d'un symbole, la phase s'est déplacée de $(k \pi/2) + \phi$, la valeur moyenne de la phase estimée sera identique à celle correspondant à un déplacement de $\phi$ sur cette même période, du fait des symétries de la fonction d'estimation de phase.

En cas de transmission d'une séquence de symboles ak aux instants kT, les symboles reçus en présence de faux accrochages s'écrivent :

$a'k = akexp (jk \pi/2)$ (exemple de l'accrochage à $fo + D/4$).

Cette séquence peut être assimilée à quatre séquences imbriquées :

$a'_{4k} = a_{4k}$

$a'_{4k+1} = exp (j \pi/2) a_{4K+1}$

$a'_{4k+2} = exp (j \pi) a_{4k+2}$

$a'_{4k+3} = exp (j 3\pi/2)a_{4k+3}$

Chacune de ces séquences est égale à la séquence correcte affectée d'un déphasage constant : 0, $\pi/2$, $\pi$ et $3 \pi/2$.

Si l'on prend soin d'opérer sur chacune de ces séquences un codage différentiel à l'émission et un décodage différentiel à la réception, la transmission de chacune de ces séquences peut être correcte, et par conséquent l'ensemble de la transmission peut être correct.

En effet, dans un codage différentiel, on code la transition d'un état de départ à un état d'arrivée (figure 1). Pour lever l'ambiguité de /2, qui existe du fait des faux accrochages, on compare les informations séparées de 4 temps symboles : Tous les 4 temps symboles, la constellation, représentant les états de phase et d'amplitude de la modulation, se retrouve au même endroit.

Le dispositif de l'invention, qui met en oeuvre ces décalages permet ainsi de travailler en présence de faux accrochages ; on peut interpréter correctement l'information transmise même si on est mal accroché.

Le schéma synoptique du dispositif de l'invention est représenté sur les figures 2 et 3 : en émission sur la figure 2 ; en réception sur la figure 3 : avec un circuit 10 de codage différentiel, un circuit 11 de décodage différentiel et des circuits 12 de délaid'un temps symbole T, SA représentant les symboles transmis, SB les symboles codés, SC les symboles reçus codés et SD les symboles décodés.

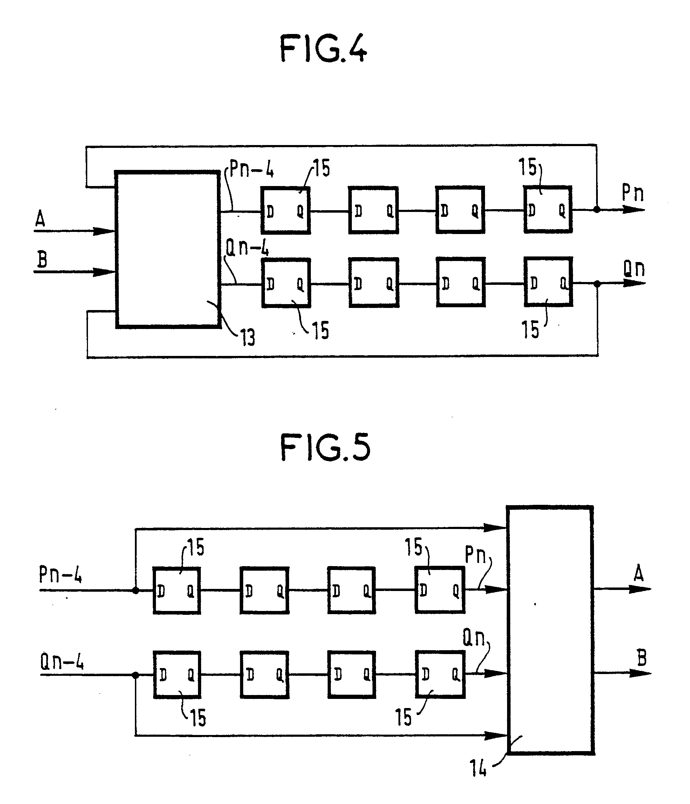

Dans un exemple d'application du dispositif de l'invention à une modulation 4 phases, comme représenté aux figures 4 et 5, un symbole à émettre est représenté par 2 trains de bits, que l'on nomme A et B.

Une réalisation en émission est représentée sur la figure 4, une réalisation en réception est représentée sur la figure 5 : avec un circuit 13 de codage différentiel, un circuit 14 de décodage différentiel, et des bascules D 15 permettant un retard d'un temps symbole T.

Le procédé de l'invention, dans une telle mise en oeuvre, est illustré sur les tableaux donnés en fin de description (codage, décodage).

Ce système doit être utilisé de préférence avec, pour la boucle de récupération de porteuse, un estimateur de phase échantillonné. En effet, dans le cas contraire, certains cas de faux accrochage se traduisent par une constellation (à l'instant d'échantillonnage) tournée de 45°, ce qui interdit toute opération de régénération.

Il est bien entendu que la présente invention n'a été décrite et représentée qu'à titre d'exemple préférentiel et que l'on pourra remplacer ses éléments constitutifs par des éléments équivalents, sans, pour autant, sortir du cadre de l'invention.

| CODAGE | | | | | | DECODAGE | | | | | |
|---|---|---|---|---|---|---|---|---|---|---|---|
| A | B | Pn-4 | Qn-4 | Pn | Qn | Pn-4 | Qn-4 | Pn | Qn | A | B |
| 0 | 0 | 0 | 0 | 0 | 0 | 0 | 0 | 0 | 0 | 0 | 0 |
| 0 | 0 | 0 | 1 | 0 | 1 | 0 | 1 | 0 | 1 | 0 | 0 |
| 0 | 0 | 1 | 0 | 1 | 0 | 1 | 0 | 1 | 0 | 0 | 0 |
| 0 | 0 | 1 | 1 | 1 | 1 | 1 | 1 | 1 | 1 | 0 | 0 |
| 0 | 1 | 0 | 0 | 1 | 0 | 0 | 0 | 1 | 0 | 0 | 1 |
| 0 | 1 | 0 | 1 | 0 | 0 | 0 | 1 | 0 | 0 | 0 | 1 |
| 0 | 1 | 1 | 0 | 1 | 1 | 1 | 0 | 1 | 1 | 0 | 1 |
| 0 | 1 | 1 | 1 | 0 | 1 | 1 | 1 | 0 | 1 | 0 | 1 |
| 1 | 0 | 0 | 0 | 1 | 1 | 0 | 0 | 1 | 1 | 1 | 0 |
| 1 | 0 | 0 | 1 | 1 | 0 | 0 | 1 | 1 | 0 | 1 | 0 |
| 1 | 0 | 1 | 0 | 0 | 1 | 1 | 0 | 0 | 1 | 1 | 0 |
| 1 | 0 | 1 | 1 | 0 | 0 | 1 | 1 | 0 | 0 | 1 | 0 |
| 1 | 1 | 0 | 0 | 0 | 1 | 0 | 0 | 0 | 1 | 1 | 1 |
| 1 | 1 | 0 | 1 | 1 | 1 | 0 | 1 | 1 | 1 | 1 | 1 |
| 1 | 1 | 1 | 0 | 0 | 0 | 1 | 0 | 0 | 0 | 1 | 1 |
| 1 | 1 | 1 | 1 | 1 | 0 | 1 | 1 | 1 | 0 | 1 | 1 |

**Revendications**

Procédé de codage différentiel pour transmission numérique, caractérisé en ce que pour permettre la transmission en présence d'un faux accrochage de la porteuse, le codage différentiel se fait non pas sur les transitions entre un symbole et celui qui le précède, mais sur les transitions entre un symbole, et celui qui lui est antérieur de quatre temps symboles.

# FIG.1

# FIG.2

# FIG.3

# FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-232626 (MATSUSHITA)<br>* page 8, lignes 1 - 2; figure 21 * | 1 | H04L27/18 |
| X | EP-A-254846 (BBC BROWN BOVERI)<br>* page 4, lignes 40 - 48; figure 5 * | 1 | |
| A | US-A-4092491 (FRAZER)<br>* abrégé; figure 10 * | 1 | |

DOMAINES TECHNIQUES
RECHERCHES (Int. Cl.5 )

H04L

Le présent rapport a été établi pour toutes les revendications

| Lieu de la recherche | Date d'achèvement de la recherche | Examinateur |
|---|---|---|
| LA HAYE | 21 SEPTEMBRE 1990 | SCRIVEN P. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant